# EUROPEAN PATENT APPLICATION

(11) **EP 4 513 904 A1**
(43) Date of publication of application: **26.02.2025**
(21) Application number: 23802566.2
(22) Date of filing: 10.04.2023
(51) Int. Cl.: H04W 4/02

(54) **POSITIONING METHOD AND APPARATUS, AND STORAGE MEDIUM AND CHIP**

(30) Priority: 07.05.2022 CN 202210492616
(71) Applicant: Huawei Technologies Co., Ltd., Shenzhen, Guangdong 518129 (CN)
(72) Inventor: GUO, Yinghao, Shenzhen, Guangdong 518129 (CN)
(74) Representative: Isarpatent
(86) International application number: PCT/CN2023/087422
(87) International publication number: WO 2023/216791

(57) **Abstract**

A positioning method, an apparatus, a storage medium, and a chip are provided, and relate to the field of communication technologies, to position a terminal device that is in an RRC inactive state and that reselects a target access network device. The terminal device in the RRC inactive state may move, for example, move from a first access network device to a cell of a second access network device. After receiving first information from a location management network element, the first access network device may send second information to an access network device. The first information is used to request to determine a reference signal resource for the terminal device, and the second information indicates to determine the reference signal resource for the terminal device. Therefore, the second access network device may determine the reference signal resource for the terminal device based on the second information, and then the terminal may send a reference signal based on the reference signal resource, to position the terminal device.

## Description

### CROSS-REFERENCE TO RELATED APPLICATIONS

This application claims priority to Chinese Patent Application No. 202210492616.X, filed with the China National Intellectual Property Administration on May 7, 2022 and entitled "POSITIONING METHOD, APPARATUS, STORAGE MEDIUM, AND CHIP", which is incorporated herein by reference in its entirety.

### TECHNICAL FIELD

This application relates to the field of communication technologies, and in particular, to a positioning method, an apparatus, a storage medium, and a chip.

### BACKGROUND

A positioning service is one of important functions in a new radio (new radio, NR) system. Currently, uplink positioning technologies include an uplink (uplink, UL) time difference of arrival (time difference of arrival, TDOA) positioning technology, an uplink angle of arrival (angle of arrival, AOA) positioning technology, and the like. In the uplink positioning technology, an access network device may configure reference signal resource information for a terminal device, and the access network device sends the reference signal resource information to the terminal device. The terminal device may send a reference signal based on the reference signal resource information configured by the access network device for the terminal device. Each access network device measures the reference signal sent by the terminal device, and reports an obtained measurement result to a location management function network element, so that the location management function network element determines location information of the terminal device with reference to information, for example, each measurement result.

When the terminal device is in a radio resource control (radio resource control, RRC) connected (connected) state, an access network device accessed by the terminal device may configure a reference signal resource for the terminal device by using an RRC reconfiguration message.

In a 5th generation mobile communication technology, an RRC inactive (inactive) state is added for the terminal device. When the terminal device in the RRC connected (connected) state receives an RRC release message, the terminal device enters the RRC inactive state. The terminal device in the RRC inactive state uses a discontinuous reception mode to reduce power consumption. A network side retains a connection between a radio access network (Radio Access Network, RAN) and a core network and a context of a user, and the terminal device in the RRC inactive state may quickly resume an RRC connection by using an RRC resume request message.

When the terminal device enters the RRC inactive state, because the terminal device in the RRC inactive state may also move, the terminal device may move from one cell (a cell of a source access network device) to another cell (for example, a cell of a target access network device). In this case, the terminal device performs cell handover.

How to position the terminal device that is in the RRC inactive state and that reselects the target access network device becomes an urgent problem to be resolved.

### SUMMARY

This application provides a positioning method, an apparatus, a storage medium, and a chip, to position a terminal device that is in an RRC inactive state and that reselects a target access network device.

According to a first aspect, an embodiment of this application provides a positioning method. The method may be performed by an access network device, or may be performed by a chip having a function similar to that of the access network device. For differentiation, in this embodiment of this application, an example in which the positioning method is performed by a first access network device is used for description. The method includes:

The first access network device receives first information from a location management function network element. The first information is used to request to determine a reference signal resource for a terminal device. The first access network device sends second information to a second access network device. The second information indicates to determine the reference signal resource for the terminal device, the reference signal resource is used by the terminal device to send a reference signal, and the reference signal is used to determine a location of the terminal device.

The terminal device in an RRC inactive state may move, for example, move from the first access network device to a cell of the second access network device. After receiving the first information from a location management network element, the first access network device may send the second information to the access network device. The second information indicates to determine the reference signal resource for the terminal device. Therefore, the second access network device may determine the reference signal resource for the terminal device based on the second information, and then the terminal device may send the reference signal based on the reference signal resource, to position the terminal device.

In this embodiment of this application, the second information may be generated by the first access network device. In a possible implementation, the second information includes the first information. For example, the first access network device may send the received first information to the second access network device as the second information. In this way, compared with a solution in which the first access network device generates the first information, a solution in which the first access network device sends the received first information to the second access network device as the second information can reduce a workload of the first access network device.

In a possible implementation, after the first access network device receives the first information from the location management function network element, and before the first access network device sends the second information to the second access network device, the first access network device receives, from the second access network device, a message used to request context information of the terminal device. The first access network device sends the context information to the second access network device.

Because the terminal device in the RRC inactive state moves to the second access network device, the second access network device may obtain the context information of the terminal device from the first access network device. The solution is compatible with an existing procedure.

In a possible implementation, after the first access network device receives the first information from the location management function network element, and before the first access network device receives, from the second access network device, the message used to request the context information of the terminal device, the first access network device sends a first paging message to an access network device in a radio access network notification area of the terminal device. The first paging message is used to request the access network device that receives the first paging message to page the terminal device, and the access network device in the radio access network notification area of the terminal device includes the second access network device.

The terminal device in the RRC inactive state may move, and may move out of a coverage area of the first access network device. Therefore, the first access network device may send the first paging message to the access network device in the radio access network notification area of the terminal device, so that another access network device initiates paging on the terminal device, to page the terminal device.

In a possible implementation, the terminal device in the RRC inactive state may move out of a signal coverage area of the first access network device, but may not move, or may not move out of the signal coverage area of the first access network device. Based on this, the first access network device sends a third paging message used to page the terminal device. When the terminal device is not paged, the first access network device sends the first paging message to the access network device in the radio access network notification area of the terminal device. In other words, the first access network device may first page the terminal device, and if the first access network device cannot page the terminal device, the first access network device requests another access network device to page the terminal device, so that signaling overheads can be reduced, and a speed of paging the terminal device can be increased.

In this embodiment of this application, the first access network device may send the second information by using a piece of new signaling. Alternatively, the first access network device includes the second information in existing signaling. In this way, the solution is more compatible with the current technology.

For example, the first access network device may include the second information in the first paging message.

For another example, the first access network device may include the second information in a message that carries the context information. In other words, the context information and the second information are carried in a same message (for example, a context response message) and sent to the second access network device. Compared with a solution in which the first paging message carries the second information, the solution can reduce signaling overheads.

In a possible implementation, after the first access network device sends the second information to the second access network device, the first access network device sends, to the location management function network element, a message that indicates to release the reference signal resource determined by the first access network device for the terminal device.

In this embodiment of this application, the first access network device may send, to the location management function network element in advance, the reference signal resource information configured by the first access network device for the terminal device. After receiving the message that indicates to release the reference signal resource determined by the first access network device for the terminal device, the location management function network element may release the reference signal resource information configured by the first access network device for the terminal device, so that storage space can be saved.

According to another aspect, after receiving the message that indicates to release the reference signal resource determined by the first access network device for the terminal device, the location management function network element may no longer send, to a neighboring access network device of the first access network device, the reference signal resource information configured by the first access network device for the terminal device. Therefore, signaling overheads can be reduced.

According to another aspect, the location management function network element may determine, based on the message that indicates release the reference signal resource determined by the first access network device for the terminal device, that the terminal device has left the signal coverage area of the first access network device. Then, the location management function network element may no longer deliver a measurement request to the first access network device and the neighboring access network device of the first access network device.

In a possible implementation, after the first access network device sends, to the location management function network element, the message that indicates to release the reference signal resource determined by the first access network device for the terminal device, the first access network device receives a message that is from the location management function network element and that indicates to stop measuring the reference signal from the terminal device.

In this way, after receiving the first information, the first access network device may stop performing a process of measuring the reference signal from the terminal device, so that resource overheads of the first access network device can be reduced.

In a possible implementation, the first information is carried in a positioning information request. Therefore, the solution is more compatible with the current technology.

According to a second aspect, an embodiment of this application provides a positioning method. The method may be performed by an access network device, or may be performed by a chip having a function similar to that of the access network device. For differentiation, in this embodiment of this application, an example in which the positioning method is performed by a second access network device is used for description. The method includes:

The second access network device receives second information from a first access network device. The second information is used to request to determine a reference signal resource for a terminal device. The reference signal resource is used by the terminal device to send a reference signal, and the reference signal is used to determine a location of the terminal device. The second access network device sends reference signal resource information to the terminal device.

The terminal device in an RRC inactive state may move, for example, move from the first access network device to a cell of the second access network device, and after receiving, from the first access network device, the second information that is used to request to determine the reference signal resource for the terminal device, the second access network device may configure the reference signal resource for the terminal device. Then the terminal device may send the reference signal based on the reference signal resource, to position the terminal device.

In a possible implementation, before the second access network device receives the second information from the first access network device, the second access network device receives a message that is from the terminal device and that is used to request to resume an RRC connection. The second access network device sends, to the first access network device, a message used to request context information of the terminal device. The second access network device receives the context information from the first access network device.

It can be learned that in the solution provided in this embodiment of this application, after the second access network device receives the message used to request to resume the RRC connection, the second access network device may request the context information from the first access network device. The solution is compatible with an existing procedure.

In a possible implementation, before the second access network device receives, from the terminal device, the message used to request to resume the RRC connection, the second access network device receives a first paging message from the first access network device. The first paging message is used to request the access network device that receives the first paging message to page the terminal device. The second access network device sends a second paging message. The second paging message is used to page the terminal device.

The terminal device in an RRC inactive state may move, and may move out of a coverage area of the first access network device. Because the first access network device may send the first paging message to the second access network device, the second access network device may initiate paging on the terminal device, to page the terminal device.

In a possible implementation, after the second access network device receives, from the terminal device, the message used to request to resume the RRC connection, the second access network device sends, to the terminal device, a message used to release the RRC connection. In this way, the terminal device in the RRC inactive state does not need to enter an RRC active state, and still remains in the RRC inactive state. It can be learned that in this embodiment of this application, when the terminal device in the RRC inactive state moves, according to the solution provided in this embodiment of this application, the terminal device can always be in the RRC inactive state and complete positioning of the terminal device, and the terminal device does not need to enter the RRC active state. Therefore, positioning efficiency can be improved.

In this embodiment of this application, the second access network device may send the reference signal resource information to the terminal device by using a new piece of signaling, or may include the reference signal resource information in existing signaling. For example, the second access network device includes the reference signal resource information in the message used to release the RRC connection. In this way, the solution is more compatible with the current technology.

In a possible implementation, after the second access network device receives the second information from the first access network device, the second access network device sends a first message to the location management function network element based on the received second information. The first message includes the reference signal resource information.

It can be learned that after receiving the second information that is from the first access network device and that is used to request to configure the reference signal resource for the terminal device, the second access network device sends the reference signal resource information to the location management function network element based on the second information. In this way, the location management function network element may deliver the reference signal resource to a neighboring access network device of the second access network device, so that each access network device measures the reference signal from the terminal device based on the reference signal resource.

In a possible implementation, the first message includes information that indicates the terminal device to access the second access network device. In this way, the location management function network element may determine, based on the first message, that the terminal device has currently accessed the second access network device. Then the location management function network element may indicate the second access network device and the neighboring access network device of the second access network device to measure the reference signal from the terminal device.

In a possible implementation, before the second access network device sends the first message to the location management function network element based on the received second information, the second access network device sends, to a mobility management function network element, a message that indicates the terminal device to access the second access network device. The second access network device receives, from the mobility management function network element, a response message of the message that indicates the terminal device to access the second access network device.

In this way, a mobility management network element side may update information about the access network device accessed by the terminal device.

In a possible implementation, after the second access network device sends the first message to the location management function network element based on the received second information, the second access network device receives a message that is from the location management function network element and that is used to request the second access network device to measure the reference signal from the terminal device.

In this way, the second access network device may measure the reference signal from the terminal device based on the message used to request the second access network device to measure the reference signal from the terminal device. For example, after the second access network device receives, from the location management function network element, the message used to request the second access network device to measure the reference signal from the terminal device, the second access network device receives the reference signal from the terminal device. The second access network device measures the reference signal to obtain a measurement result. The second access network device sends the measurement result to the location management function network element. The measurement result is used to determine location information of the terminal device. The solution is more compatible with the current technology.

According to a third aspect, an embodiment of this application provides a positioning method. The method may be performed by a location management function network element, or may be performed by a chip having a function similar to that of the location management function network element. For differentiation, in this embodiment of this application, an example in which the positioning method is performed by the location management function network element is used for description. The method includes:

The location management function network element sends first information to a first access network device. The first information is used to request to determine a reference signal resource for a terminal device. The location management function network element receives a first message from a second access network device. The first message includes reference signal resource information determined by the second access network device for the terminal device. A reference signal resource indicated by the reference signal resource information is used by the terminal device to send a reference signal. The reference signal is used to determine a location of the terminal device. The location management function network element sends, to at least one of the second access network device and a neighboring access network device of the second access network device, a message used to request to measure the reference signal from the terminal device.

The terminal device in an RRC inactive state may move, for example, move from the first access network device to a cell of the second access network device. After sending the first information to the first access network device, the location management function network element receives the reference signal resource information that is from the second access network device and that is determined by the second access network device for the terminal device. Therefore, the location management function network element determines that the terminal device is currently located in a signal coverage area of the second access network device, and the location management function network element sends, to the at least one of the second access network device and the neighboring access network device of the second access network device, the message used to request to measure the reference signal from the terminal device, so that the at least one of the second access network device and the neighboring access network device of the second access network device measures the reference signal sent by the terminal device, to position the terminal device. It can be learned that the solution may be used to position the terminal device that is in the RRC inactive state and that has moved.

In a possible implementation, after the location management function network element sends, to the at least one of the second access network device and the neighboring access network device of the second access network device, the message used to request to measure the reference signal from the terminal device, the location management function network element receives a measurement result that is from the second access network device and that is obtained by measuring the reference signal from the terminal device. The measurement result is used to determine location information of the terminal device.

In a possible implementation, the first message includes information that indicates the terminal device to access the second access network device. In this way, the location management function network element may determine, based on the first message, that the terminal device has currently accessed the second access network device. Then the location management function network element may indicate the second access network device and the neighboring access network device of the second access network device to measure the reference signal from the terminal device.

In a possible implementation, after the location management function network element sends a positioning information request message to the first access network device, the location management function network element receives, from the first access network device, a message that indicates to release the reference signal resource determined by the first access network device for the terminal device. The location management function network element sends, to the first access network device, a message that indicates to stop measuring the reference signal from the terminal device.

In this embodiment of this application, the first access network device may send, to the location management function network element in advance, the reference signal resource information configured by the first access network device for the terminal device. After receiving the message that indicates to release the reference signal resource determined by the first access network device for the terminal device, the location management function network element may release the reference signal resource information configured by the first access network device for the terminal device, so that storage space can be saved. In addition, because the location management function network element sends, to the first access network device, the message that indicates to stop measuring the reference signal from the terminal device, after receiving the first information, the first access network device may stop performing a process of measuring the reference signal from the terminal device, so that resource overheads of the first access network device can be reduced.

According to a fourth aspect, a communication apparatus is provided. The communication apparatus may be a first access network device, a second access network device, or a location management function network element. The communication apparatus may include a communication unit and a processing unit, to perform any one of the implementations of any method in the first aspect to the third aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the implementations of any method in the first aspect to the third aspect.

According to a fifth aspect, a communication apparatus is provided. The communication apparatus may be the first access network device, the second access network device, or the location management function network element. The communication apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the implementations of any method in the first aspect to the third aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a sixth aspect, a communication apparatus is provided. The communication apparatus may be the first access network device, the second access network device, or the location management function network element. The communication apparatus may include a processor. The processor is coupled to a memory, and may be configured to perform the method in any one of the first aspect to the third aspect and any one of the possible implementations of the first aspect to the third aspect. Optionally, the communication apparatus further includes the memory. Optionally, the communication apparatus further includes a communication interface, and the processor is coupled to the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a system is provided. The system includes the first access network device, the second access network device, and the location management function network element.

According to an eighth aspect, a computer program product is provided. The computer program product includes a computer program (which may also be referred to as code or instructions). When the computer program is run, a computer is enabled to perform the method in any one of the possible implementations of the first aspect, or the computer is enabled to perform the method in any one of the implementations of the first aspect to the third aspect.

According to a ninth aspect, a computer-readable storage medium is provided. The computer-readable medium stores a computer program (which may also be referred to as code or instructions). When the computer program is run on a computer, the computer is enabled to perform the method in any one of the possible implementations of the first aspect, or the computer is enabled to perform the method in any one of the implementations of the first aspect to the third aspect.

According to a tenth aspect, a chip system is provided. The chip system may include a processor. The processor is coupled to a memory, and may be configured to perform the method in any one of the first aspect to the third aspect and any one of the possible implementations of the first aspect to the third aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the first aspect to the third aspect and any one of the possible implementations of the first aspect to the third aspect.

According to an eleventh aspect, a communication apparatus is provided. The communication apparatus may be the first access network device, the second access network device, or the location management function network element. The communication apparatus may include an interface circuit and a processing circuit. The interface circuit may include an input circuit and an output circuit. The processing circuit is configured to receive a signal through the input circuit, and transmit a signal through the output circuit, to perform the method in any one of the first aspect to the third aspect and any one of the possible implementations of the first aspect to the third aspect.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

In an implementation, when the communication apparatus is a wireless communication device, the wireless communication device may be a terminal, for example, a smartphone, or may be a radio access network device, for example, a base station. The interface circuit may be a radio frequency processing chip in the wireless communication device, and the processing circuit may be a baseband processing chip in the wireless communication device.

In another implementation, the communication apparatus may be some components in the wireless communication device, for example, an integrated circuit product, for example, a system chip or a communication chip. The interface circuit may be an input/output interface, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of a possible network architecture to which an embodiment of this application is applicable;
FIG. 2 is a diagram of another possible network architecture to which an embodiment of this application is applicable;
FIG. 3 is a possible schematic flowchart of a positioning method according to an embodiment of this application;
FIG. 4 is a diagram of a possible structure of a positioning information request according to an embodiment of this application;
FIG. 5 is a possible schematic flowchart of a positioning method according to an embodiment of this application;
FIG. 6 is a diagram of a structure of another communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

### DESCRIPTION OF EMBODIMENTS

The following further describes in detail embodiments of this application with reference to the accompanying drawings.

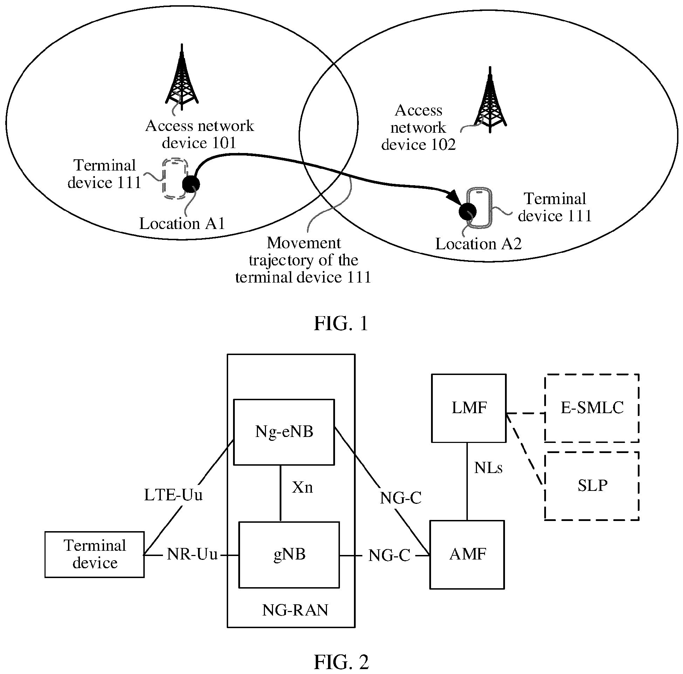

FIG. 1 is an example of a diagram of a possible system architecture to which an embodiment of this application is applicable. As shown in FIG. 1, the system architecture may include a plurality of access network devices and one or more terminal devices. FIG. 1 shows an example of an access network device 101, an access network device 102, and a terminal device 111.

As shown in FIG. 1, in this embodiment of this application, the terminal device in an inactive state moves from a location A1 to a location A2. The location A1 is in a signal coverage area of the access network device 101, and the location A2 is in a signal coverage area of the access network device 102. FIG. 1 shows an example of a movement trajectory of the terminal device 111.

Because the terminal device 111 moves when the terminal device 111 is in an RRC inactive state, a core network element (for example, an access and mobility management function network element) still considers that the terminal device 111 is located in the signal coverage area of the access network device 101, and does not know that the terminal device 111 has moved to the signal coverage area of the access network device 102. Therefore, when receiving first information that is from a location management function network element and that is used to request to determine a reference signal resource for the terminal device, the core network element (for example, the access and mobility management function network element) sends the message to the access network device 101.

This embodiment of this application provides a solution. In the solution, after receiving the first information, the access network device 101 may send, to the access network device 102, second information used to request to determine the reference signal resource for the terminal device, so that the access network device 102 can configure the reference signal resource for the terminal device 111, and then the terminal may send a reference signal based on the reference signal resource, to position the terminal device. For example, the terminal device 111 may send the reference signal based on reference signal resource information configured by the access network device 102 for the terminal device 111. Each access network device (for example, the access network device 102 and a neighboring access network device of the access network device 102) measures the reference signal sent by the terminal device, and reports an obtained measurement result to a location management function network element, so that the location management function network element determines location information of the terminal device with reference to information, for example, each measurement result.

It can be learned that, in the solution provided in this embodiment of this application, when the terminal device in the RRC inactive state moves, for example, moves from a cell of an access network device to a cell of another access network device, the terminal device in the RRC inactive state can still be positioned.

It should be noted that the solution provided in this embodiment of this application is applicable to a plurality of positioning technologies such as a UL-TDOA positioning technology and a UL-AOA positioning technology. This is not limited in embodiments of this application.

The technical solutions provided in embodiments of this application are mainly applicable to a wireless communication system. The wireless communication system may comply with a wireless communication standard of the third generation partnership project (third generation partnership project, 3GPP). For example, the solutions provided in embodiments of this application may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to various communication systems in the future, for example, a 6th generation (6th generation, 6G) communication system. Alternatively, the technical solutions provided in embodiments of this application may comply with another wireless communication standard, for example, a wireless communication standard of the institute of electrical and electronics engineers (Institute of Electrical and Electronics Engineers, IEEE) 802 series (such as 802.11, 802.15, or 802.20). A method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system, and the satellite communication system may be integrated with the foregoing communication system.

For ease of description, a 5G network architecture shown in FIG. 2 is used as an example in embodiments of this application to show a diagram of a possible network architecture to which embodiments of this application are applicable. A possible network architecture to which this application is applicable may include three parts: a terminal device, an access network device (also referred to as a next generation (next generation, NG) radio access network (radio access network, RAN) device), and a core network (core network).

The terminal device may include a device that provides a user with voice and/or data connectivity, for example, may include a handheld device having a wireless connection function, or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a device-to-device (device-to-device, D2D) communication terminal device, a vehicle to everything (vehicle to everything, V2X) communication terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), or the like. For example, the terminal device may include a mobile phone (also referred to as a "cellular" phone), a computer having a mobile terminal device, or a portable, pocket-sized, handheld, or computer-embedded mobile apparatus. For example, the terminal device is a device, for example, a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). Alternatively, the terminal device may be a tablet computer or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in autonomous driving, a wireless terminal in telemedicine, a wireless terminal in a smart grid, a wireless terminal in a smart city (smart city), a wireless terminal in a smart home (smart home), or the like. The terminal device may further include a limited device, for example, a device with low power consumption, a device with a limited storage capability, or a device with a limited computing capability. For example, the terminal device includes information sensing devices such as a barcode, radio frequency identification (radio frequency identification, RFID), a sensor, a global positioning system (global positioning system, GPS), or a laser scanner.

An access network (access network, AN) device (for example, a base station) may be a device that communicates with a wireless terminal device on an air interface in an access network through one or more cells. For example, the access network device may include an evolved base station (NodeB, eNB, e-NodeB, or evolved NodeB) in an LTE system or long term evolution-advanced (long term evolution-advanced, LTE-A), may include a next generation NodeB (next generation NodeB, gNB) in a 5th generation (5th generation, 5G) mobile communication technology new radio (new radio, NR) system, or may include a central unit (central unit, CU) and a distributed unit (distributed unit, DU) that are in a cloud radio access network (cloud radio access network, Cloud RAN) system. This is not limited in embodiments of this application.

As shown in FIG. 2, an example in which an access network includes a gNB and an Ng-eNB is used for illustration in FIG. 2. The Ng-eNB is an LTE base station, and the gNB is an NR base station. The terminal device may communicate with a serving base station through a Uu link. For example, the terminal device may communicate with the Ng-eNB through an LTE-Uu link, or may communicate with the gNB through an NR-Uu link. Base stations may communicate with each other through an Xn interface.

Positioning-related network elements in the core network mainly include: an access and mobility management function (access and mobility management function, AMF) network element, a location management function (location management function, LMF) network element, and the like. The network elements may further include an evolved serving mobile positioning center (evolved serving mobile location center, E-SMLC) network element, a unified data management (unified data management, UDM) network element, and an application function (application function, AF) network element.

The base station may communicate with the AMF network element through an NG-C interface, and the AMF network element may be equivalent to a router for communication between the gNB and the LMF.

The LMF network element may estimate a location of the terminal device, and the AMF communicates with the LMF through an NLs interface.

The E-SMLC network element is mainly responsible for processing a location request of a positioning service, and selecting an appropriate AMF network element for the positioning service.

A service location protocol (service location protocol, SLP) network element may also communicate with the LMF network element, and may be responsible for processing the location request of the positioning service.

An application scenario to which embodiments of this application are applicable may further include a location management component (location management component, LMC). The LMC may be some functional components of the LMF, and may be integrated into a gNB on an NG-RAN side.

A mobility management network element and a location management network element in embodiments of this application may be the AMF and the LMF in FIG. 2, or may be network elements that respectively have functions of the AMF and the LMF in a future communication network, for example, a 6th generation (6th generation, 6G) network. This is not limited in this application. For ease of description, this application is described by using an example in which the mobility management network element and the location management network element are respectively the AMF and the LMF.

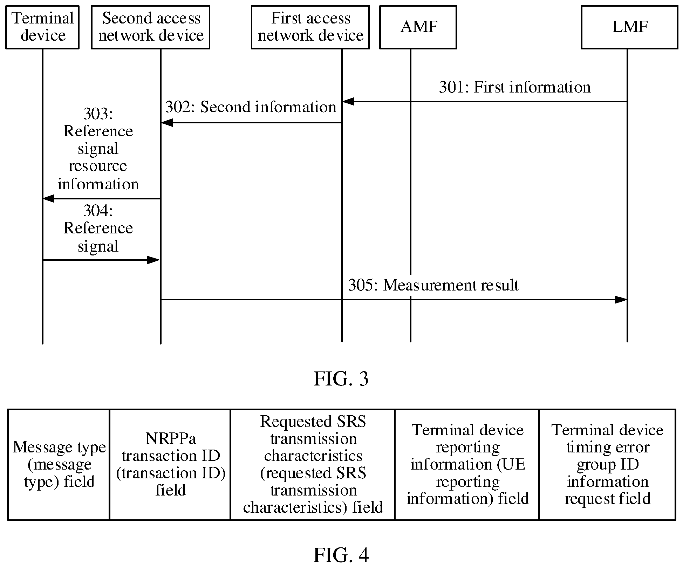

Based on the foregoing content, FIG. 3 is an example of a possible schematic flowchart of a positioning method according to an embodiment of this application. To describe the solutions provided in embodiments of this application more clearly, FIG. 3 is described from an interaction perspective. The method may be performed by a first access network device, a second access network device, an AMF, an LMF, and a terminal device.

In this embodiment of this application, the first access network device may be the access network device 101 in FIG. 1, or may be the gNB or the Ng-eNB in FIG. 2. In this embodiment of this application, a solution performed on a first access network device side may alternatively be performed by a unit, a module, or a chip in the first access network device, or may be performed by another apparatus, unit, module, or chip that has a capability of performing the solution on the first access network device side. In this embodiment of this application, an example in which the solution is performed by the first access network device is used for description.

In this embodiment of this application, the second access network device is an access network device different from the first access network device. The second access network device may be the access network device 102 in FIG. 1, or may be the gNB or the Ng-eNB in FIG. 2. In this embodiment of this application, a solution performed on a second access network device side may alternatively be performed by a unit, a module, or a chip in the second access network device, or may be performed by another apparatus, unit, module, or chip that has a capability of performing the solution on the second access network device side. In this embodiment of this application, an example in which the solution is performed by the second access network device is used for description.

The terminal device in this embodiment of this application may be the terminal device 111 in FIG. 1, or may be the terminal device in FIG. 2. In this embodiment of this application, a solution performed on a terminal device side may alternatively be performed by a unit, a module, or a chip in the terminal device, or may be performed by another apparatus, unit, module, or chip that has a capability of performing the solution on the terminal device side. In this embodiment of this application, an example in which the solution is performed by the terminal device is used for description.

The LMF in this embodiment of this application may be the LMF in FIG. 2. In this embodiment of this application, a solution performed on an LMF side may alternatively be performed by a unit, a module, or a chip in the LMF, or may be performed by another apparatus, unit, module, or chip that has a capability of performing the solution on the LMF side. In this embodiment of this application, an example in which the solution is performed by the LMF is used for description.

The AMF in this embodiment of this application may be the AMF in FIG. 2. In this embodiment of this application, a solution performed on an AMF side may alternatively be performed by a unit, a module, or a chip in the AMF, or may be performed by another apparatus, unit, module, or chip that has a capability of performing the solution on the AMF side. In this embodiment of this application, an example in which the solution is performed by the AMF is used for description.

As shown in FIG. 3, the method includes the following steps.

Step 301: The LMF sends first information to the first access network device.

Correspondingly, the first access network device receives the first information from the LMF. The first information is used to request to determine a reference signal resource for the terminal device.

In this embodiment of this application, the first information may be carried in a positioning information request. The positioning information request may be written as positioning information request in English. The positioning information request may be an NR positioning protocol annex (NR positioning protocol annex, NRPPa) message.

FIG. 4 shows an example of a diagram of a possible structure of a positioning information request. As shown in FIG. 4, the positioning information request includes a message type (message type) field, a new radio positioning protocol annex (new radio positioning protocol annex, NRPPa) transaction (transaction) identifier (identifier, ID) field, a requested SRS transmission characteristics (requested SRS transmission characteristics) field, a terminal device reporting information (UE reporting information) field, and a terminal device timing error group ID information request (UE timing error group ID Information Request) field.

The NRPPa transaction identifier (transaction ID) field is used to identify the message, so that when receiving a plurality of NRPPa messages, a receiving end can distinguish whether a plurality of received downlink messages are a same NRPPa message. A requested SRS transmission characteristic may be considered as a body of the message, and is used to request an SRS resource.

In a possible implementation, the LMF may send, to the AMF, a message that carries the first information. When the terminal device in an RRC inactive state moves, for example, moves from a source serving access network device to a target serving access network device, because the terminal device is in the RRC inactive state, the AMF does not know that the terminal device has moved to the target serving access network device, and the AMF considers that the terminal device is still in a signal coverage area of the source serving access network device. The first information further includes an identifier of the terminal device. After receiving the first information, the AMF determines the source serving access network device of the terminal device, that is, the first access network device, based on the identifier of the terminal device in the first information, and sends a received message that carries the first information to the first access network device.

Step 302: The first access network device sends second information to the second access network device.

Correspondingly, the second access network device receives the second information from the first access network device. The second information is used to request to determine the reference signal resource for the terminal device. The reference signal resource is used by the terminal device to send a reference signal. The reference signal is used to determine a location of the terminal device.

In this embodiment of this application, the second information may be generated by the first access network device. In another possible implementation, the second information includes the first information. For example, the first access network device may send the received first information to the second access network device as the second information. In this way, compared with a solution in which the first access network device generates the first information, a solution in which the first access network device sends the received first information to the second access network device as the second information can reduce a workload of the first access network device.

In a possible implementation, the second information may include the following fields in the message shown in FIG. 4: a message type (message type) field, an NRPPa transaction identifier (transaction ID) field, a requested SRS transmission characteristics (requested SRS transmission characteristics) field, a terminal device reporting information (UE reporting information) field, and a terminal device TEG ID information request (UE TEG ID Information Request) field.

In a possible implementation, the second information sent by the first access network device to the second access network device may include the first information.

For the terminal device in the RRC inactive state, the source serving access network device (for example, the first access network device) needs to track a radio access network-based notification area (RAN-based notification area, RNA) in which the terminal device is located, and an RNA may include one or more cells. For example, when the terminal device moves to a new RNA, an RNA update process may be triggered, so that the terminal device notifies the source serving access network device (for example, the first access network device) that the terminal device has moved to the new RNA (the target serving access network device, for example, the second access network device), and then the source serving access network device (for example, the first access network device) updates RNA information of the terminal device, to ensure that when the terminal device needs to be found, the source serving access network device (for example, the first access network device) can page the terminal device in the RNA in which the terminal device is located. In this embodiment of this application, the second access network device may be an access network device in the RNA of the terminal device. In this embodiment of this application, the source access network device may be, for example, a last serving base station (last serving gNB), and the target serving access network device may be, for example, a serving base station (serving gNB).

Step 303: The second access network device sends reference signal resource information to the terminal device.

Correspondingly, the terminal device receives the reference signal resource information.

In this embodiment of this application, before step 303, the terminal device is in the RRC inactive state, and after step 303, the terminal device is still in the RRC inactive state. The second access network device sends the reference signal resource information to the terminal device in the RRC inactive state.

In this embodiment of this application, the reference signal may be, for example, a sounding reference signal (sounding reference signal, SRS), or may be another signal, for example, may be a positioning reference signal (positioning reference signal, PRS), a channel state information reference signal (channel state information reference signal, CSI-RS), a demodulation reference signal (demodulation reference signal, DMRS), a phase tracking reference signal (phase tracking reference signal, PTRS), a positioning reference signal (positioning reference signal, PRS), a cell reference signal (cell reference signal, CRS), or a synchronization signal/physical broadcast channel block (Synchronization signal/physical broadcast channel block, SS/PBCH block). The SS/PBCH block may be referred to as an SSB for short. In this embodiment of this application, an example in which the reference signal is the SRS is used for description.

The reference signal resource information may include information about a time domain resource and/or information about a frequency domain resource of the reference signal. The following describes content included in the reference signal resource information by using an example in which the reference signal is the SRS.

For example, the reference signal resource information may include: an SRS resource ID, information about a time domain resource (for example, a period, semi-static, or aperiodic resource ) of an SRS resource configuration, an SRS bandwidth, a frequency hopping bandwidth, a frequency domain position, and a configurable offset.

Step 304: The terminal device sends the reference signal based on the reference signal resource information.

Correspondingly, the second access network device receives the reference signal from the terminal device.

Step 305: The second access network device measures the reference signal to obtain a measurement result, and sends the measurement result to the LMF.

Correspondingly, the LMF receives the measurement result. The measurement result is used to determine location information of the terminal device.

The solutions provided in embodiments of this application are applicable to a plurality of positioning technologies, such as a UL-TDOA positioning technology and a UL-AOA positioning technology. In this embodiment of this application, a type of a measurement result obtained by measuring the reference signal by the second access network device is a type of a measurement result corresponding to the positioning technology. For example, when the UL-TDOA positioning technology is used to position the terminal device, in step 305, the second access network device measures the reference signal, and an obtained measurement result may be uplink relative time of arrival (uplink relative time of arrival, UL-RTOA). For another example, when the UL-TDOA positioning technology is used to position the terminal device, in step 305, the second access network device measures the reference signal, and an obtained measurement result may be an AOA. The type of the measurement result of the reference signal is not limited in embodiments of this application.

It can be learned from the foregoing content that the terminal device in the RRC inactive state may move, for example, move from the first access network device to a cell of the second access network device. After receiving the first information from a location management network element, the first access network device may send the second information to the access network device. The second information indicates to determine the reference signal resource for the terminal device. Therefore, the second access network device may determine the reference signal resource for the terminal device based on the second information, and then the terminal may send the reference signal based on the reference signal resource, to position the terminal device.

It should be noted that, in step 301, the LMF may send the first information when the LMF needs to position the terminal device. In addition, the LMF needs to actively initiate a location request in an instant mobile terminated location request (mobile terminated location request, MT-LR) scenario and a network initiated location request (network initiated location request, NI-LR) scenario. Therefore, the solution is further applicable to the instant MT-LR scenario and the NI-LR scenario, and is further applicable to a scenario in which the terminal device in the RRC inactive state performs cell handover in the two scenarios.

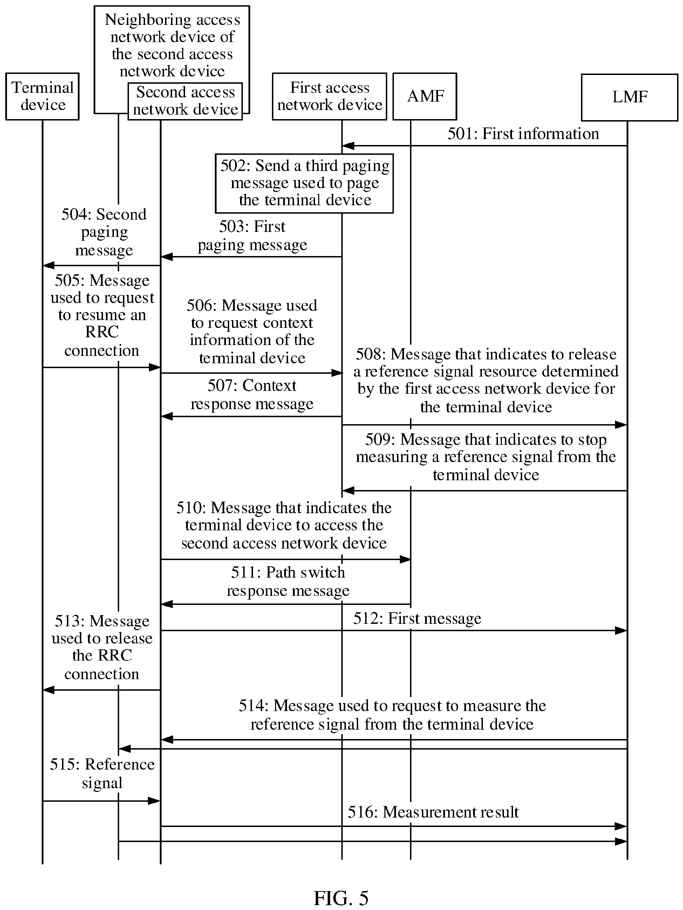

Based on embodiments shown in FIG. 3 and FIG. 4 and the foregoing other content, FIG. 5 is an example of a possible schematic flowchart of another positioning method according to an embodiment of this application. As shown in FIG. 5, the method includes the following steps.

Step 501: A location management function network element sends first information to a first access network device.

Correspondingly, the first access network device receives the first information from the location management function network element.

For content of step 501, refer to related descriptions of step 301. Details are not described herein again.

Step 502: The first access network device sends a third paging message used to page a terminal device.

Step 503: When the terminal device is not paged, the first access network device sends a first paging message to an access network device in a radio access network notification area of the terminal device.

The access network device in the radio access network notification area of the terminal device includes a second access network device.

Correspondingly, the access network device (including the second access network device) in the radio access network notification area of the terminal device receives the first paging message from the first access network device. The first paging message is used to request the access network device that receives the first paging message to page the terminal device.

Step 504: The second access network device sends a second paging message.

The second paging message is used to page the terminal device.

Correspondingly, the terminal device receives the second paging message.

It should be noted that after step 503, one or more or all of access network devices in the radio access network notification area of the terminal device may initiate paging on the terminal device. In this embodiment of this application, an example in which the second access network device initiates paging on the terminal device and pages the terminal device is used for description.

Step 505: The terminal device sends, to the second access network device, a message used to request to resume a radio resource control RRC connection.

Correspondingly, the second access network device receives the message that is from terminal device and that is used to request to resume the radio resource control RRC connection.

In step 505, the terminal device is in an RRC non-connected state. The terminal device in the RRC non-connected state sends the message used to request to resume the radio resource control RRC connection. The message used to request to resume the radio resource control RRC connection may alternatively be an RRC connection resume request. The RRC connection resume request may be written as RRC resume request in English.

Step 506: The second access network device sends, to the first access network device, a message used to request context information of the terminal device.

Correspondingly, the first access network device receives, from the second access network device, the message that is used to request the context information of the terminal device.

The message used to request the context information of the terminal device may be a UE context request, and the UE context request may be written as retrieve UE context request in English.

Step 507: The first access network device sends a context response message to the second access network device.

Correspondingly, the second access network device receives the context response message from the first access network device.

The context response message includes the context information. The context response message may also have another name, for example, may also be referred to as a context request response message. The context request response message may be written as retrieve UE context response in English.

In this embodiment of this application, the first access network device sends the second information to the second access network device in a plurality of manners. For example, the first access network device may include the second information in the third paging downlink message in step 502. For another example, the first access network device may send the second information to the second access network device by using a piece of new signaling.

In another possible implementation, the first access network device may send the context information and the second information together to the second access network device through step 507. For example, the first access network device may include the second information in the context response message and send the context response message to the second access network device. In this way, a delay can be reduced, a quantity of signaling can be reduced, and no new signaling is added. Therefore, the solution is more compatible with the current technology, and solution complexity can be reduced.

In this embodiment, the first access network device may include the second information in the context response message when determining that the first information is received from an LMF and the message that is from the second access network device and that is used to request the context information of the terminal device is received. That the first information is received from the LMF and the message that is used to request the context information of the terminal device and that is from the second access network device is received may be considered as two conditions for the first access network device to include the second information in the context response message.

In the embodiment shown in FIG. 5, an example in which the second information is carried in the context response message is used for description.

Step 508: The first access network device sends, to the LMF, a message that indicates to release a reference signal resource determined by the first access network device for the terminal device.

Correspondingly, the LMF receives, from the first access network device, the message that indicates to release the reference signal resource determined by the first access network device for terminal device.

In a possible implementation, when sending the second information to the second access network device, the first access network device may send, to the LMF, the message that indicates to release the reference signal resource determined by the first access network device for the terminal device. It may also be understood that, that the first access network device sends the second information to the second access network device is a condition under which the first access network device sends, to the LMF, the message that indicates to release the reference signal resource determined by the first access network device for the terminal device.

The message that indicates to release the reference signal resource determined by the first access network device for the terminal device may be a positioning information update message, and the positioning information update message may be written as positioning information request in English.

In a possible implementation, when the first access network device has configured the reference signal resource for the terminal device, the first access network device releases (which may also be referred to as deleting) the reference signal resource configured by the first access network device for the terminal device. The first access network device may release the reference signal resource configured for the terminal device before sending the message that indicates to release the reference signal resource determined by the first access network device for the terminal device, or may release the reference signal resource configured by the first access network device for the terminal device after sending the message that indicates to release the reference signal resource determined by the first access network device for the terminal device.

When an LMF side stores the reference signal resource configured by the first access network device for the terminal device, the first access network device may send, through step 508, the message that indicates to release the reference signal resource determined by the first access network device for the terminal device. After receiving the message, the LMF may release (which may also be referred to as deleting) the reference signal resource that is configured by the first access network device for the terminal device and that is stored on the LMF side.

In a possible implementation, the message that indicates to release the reference signal resource determined by the first access network device for the terminal device may indicate the first access network device to release the reference signal resource determined for the terminal device. In this case, when the LMF determines that the first access network device releases the reference signal resource determined for the terminal device, the LMF may also release the reference signal resource determined by the first access network device for the terminal device.

In another possible implementation, the message that indicates to release the reference signal resource determined by the first access network device for the terminal device may indicate the LMF to release the reference signal resource determined by the first access network device for the terminal device. In this case, the LMF may perform, based on the message that indicates to release the reference signal resource determined by the first access network device for the terminal device, an action of releasing the reference signal resource determined by the first access network device for the terminal device.

It should be noted that step 508 is an optional step. For example, when the LMF side does not store the reference signal resource configured by the first access network device for the terminal device, step 508 may not be performed.

Step 509: The LMF sends, to the first access network device, a message that indicates to stop measuring a reference signal from the terminal device.

Correspondingly, the first access network device receives, from the LMF, the message that indicates to stop measuring the reference signal from the terminal device.

Step 509 is an optional step. After receiving the message that is sent by the first access network device and that indicates to release the reference signal resource determined by the first access network device for the terminal device, the LMF may perform step 509, or may not perform step 509.

The LMF may send, to the first access network device, the message that indicates to stop measuring the reference signal from the terminal device, or may send, to a neighboring access network device of the first access network device, the message that indicates to stop measuring the reference signal from the terminal device. This is not limited in embodiments of this application.

Step 510: The second access network device sends, to an AMF, a message that indicates the terminal device to access the second access network device.

Correspondingly, the AMF receives the message that indicates the terminal device to access the second access network device.

The message that indicates the terminal device to access the second access network device may be a path switch request, and the path switch request may be written as path switch request in English.

Step 511: The AMF sends a path switch response message to the second access network device.

Correspondingly, the second access network device receives the path switch response message from the AMF.

The path switch response message may be understood as a message of a response message of the message that indicates the terminal device to access the second access network device. In this embodiment of this application, an example in which the message is referred to as the path switch response message is used for description. During actual application, the message may also have another name. The path switch response message may be written as path switch request response in English.

In this embodiment of this application, the AMF may allocate an identifier to the terminal device after receiving the message that indicates the terminal device to access the second access network device in step 510. Further, the identifier of the terminal device may be carried in the path switch response message. In this embodiment of this application, the identifier allocated by the AMF to the terminal device may be an identifier of the terminal device on an interface between the second access network device and the AMF.

In a possible implementation, after step 511, the second access network device may further send, to the first access network device, a message that indicates to release the context information of the terminal device. The message that indicates to release the context information of the terminal device may also be referred to as a UE context release request, and the UE context release request may be written as UE context release in English.

Step 512: The second access network device sends a first message to the LMF. The first message includes reference signal resource information.

Correspondingly, the LMF receives the first message.

In a possible implementation, the second access network device may send the first message to the LMF when receiving the second information from the first access network device. It may also be understood that, that the second access network device receives the second information from the first access network device is a condition under which the second access network device sends the first message to the LMF.

In another possible implementation, when receiving the second information from the first access network device and receiving the path switch response message from the AMF, the second access network device may send the first message to the LMF. It may also be understood that, that the second access network device receives the second information from the first access network device and that the second access network device receives the path switch response message from the AMF are conditions under which the second access network device sends the first message to the LMF.

In this embodiment of this application, the first message may also be referred to as a positioning information response message, and the positioning information response message may be referred to as a positioning information response. The first message may be considered as a response message of a message (which may be referred to as a positioning information request) that carries the first information and that is sent by the LMF to the first access network device in step 501.

In step 512, the second access network device may send the first message to the LMF based on the received second information. In other words, after receiving, from the first access network device, the second information used to request to configure the reference signal resource for the terminal device, the second access network device returns, to the LMF, the reference signal resource information configured by the second access network device for the terminal device. In this way, the LMF notifies the second access network device and a neighboring access network device of the second access network device to measure the reference signal sent by the terminal device.

In a possible implementation, the first message includes information that indicates the terminal device to access the second access network device. In this way, the LMF may determine, based on the first message, that a target access network device of the terminal device is the second access network device, and then may send, to the second access network device and the second access network device, a message used to request to measure the reference signal from the terminal device.

In a possible implementation, the second access network device may send the reference signal resource information to the AMF, and then the AMF sends the reference signal resource information to the LMF. A message that is sent by the second access network device to the AMF and that carries the reference signal resource information may carry the identifier allocated by the AMF to the terminal device. The message that is sent by the AMF to the LMF and that carries the reference signal resource information may carry another identifier of the terminal device. In this way, in an information transmission process, identification information of the terminal device may not need to be transmitted in plaintext, to improve information transmission security.

Step 513: The second access network device sends, to the terminal device, a message used to release an RRC connection.

Correspondingly, the terminal device receives the message used to release the RRC connection.

The message used to release the RRC connection may be referred to as an RRC release message, and the RRC release message may be written as RRC release in English.

In a possible implementation, the second access network device may send the reference signal resource information to the terminal device by using a piece of new signaling. In another possible implementation, the second access network device may include the reference signal resource information in the message used to release the RRC connection. In this way, the solution is compatible with the current technology, and signaling overheads can be reduced.

In a possible implementation, the reference signal resource information sent by the second access network device to the terminal device is the same as the reference signal resource information carried in the first message of the second access network device. In this way, the LMF can send the reference signal resource information to the neighboring access network device of the second access network device, so that the neighboring access network device measures the reference signal from the terminal device based on the reference signal resource information.

In a possible implementation, when receiving the second information from the first access network device, the second access network device may send, to the terminal device, the message used to release the RRC connection. It may also be understood that, that the second access network device receives the second information from the first access network device is a condition under which the second access network device sends, to the terminal device, the message used to release the RRC connection.

In another possible implementation, when receiving the second information from the first access network device and receiving the path switch response message from the AMF, the second access network device may send, to the terminal device, the message used to release the RRC connection. It may also be understood that, that the second access network device receives the second information from the first access network device and that the second access network device receives the path switch response message from the AMF are conditions under which the second access network device sends, to the terminal device, the message used to release the RRC connection.

In step 513, after the terminal device in the RRC inactive state sends, through step 505, the message used to request to resume the radio resource control RRC connection, the second access network device sends, through step 513, the message used to release the RRC connection. Therefore, the terminal device is still in the RRC inactive state. It should be noted that the terminal device is in the RRC inactive state before step 505, continues to be in the RRC inactive state after sending the message used to request to resume the radio resource control RRC connection, and is still in the RRC inactive state after receiving the message used to release the RRC connection. It can be learned that in the solution provided in this embodiment of this application, the terminal device is always in the RRC inactive state, and the terminal device does not need to enter an RRC connected state, so that power consumption and a delay of the terminal device can be reduced.

Step 514: The LMF sends, to at least one of the second access network device and the neighboring access network device of the second access network device, the message used to request to measure the reference signal from the terminal device.

Correspondingly, the second access network device receives, from the LMF, the message used to request the second access network device to measure the reference signal from the terminal device.

The message used to request to measure the reference signal from the terminal device may be a positioning measurement request, and the positioning measurement request may be an NRPPa message. The positioning measurement request may be written as measurement request in English.

Step 515: The terminal device sends the reference signal based on the reference signal resource information.

Correspondingly, the second access network device receives the reference signal from the terminal device.

For content of step 515, refer to related descriptions of step 304. Details are not described herein again.

In a possible implementation, after receiving the reference signal resource information, the terminal device sends the reference signal based on the reference signal resource information. For example, the reference signal may be sent in a configuration indicated by the reference signal resource information.

In a possible implementation, before step 515, the LMF may further send a semi-persistent or aperiodic reference signal activation command to the terminal device through the second access network device. The terminal device may send the reference signal after receiving the activation command.

For example, the LMF may send, to the second access network device, a message used to request to activate the reference signal of the terminal device, and then after receiving the message used to request to activate the reference signal of the terminal device, the second access network device may send, to the terminal device, a message used to activate SRS transmission of the terminal device. For example, the message used to request to activate the reference signal of the terminal device may be a UE SRS activation request. The UE SRS activation request may be an NRPPa message, and may be written as request UE SRS activation in English. The message used to activate SRS transmission of the terminal device may be referred to as activating UE SRS transmission, and the activating UE SRS transmission may be written as activating UE SRS transmission in English.

Step 516: The second access network device measures the reference signal to obtain a measurement result, and sends the measurement result to the location management function network element.

Correspondingly, the location management function network element receives the measurement result. The measurement result is used to determine location information of the terminal device.

The second access network device may include the measurement result in a measurement response and send the measurement response to the LMF. The measurement response may be written as measurement response in English.

For content of step 516, refer to related descriptions of step 305. Details are not described herein again.

It should be noted that the neighboring access network device of the second access network device may also measure the reference signal to obtain a measurement result, and send the measurement result to the location management function network element. FIG. 5 shows an example in which the neighboring access network device of the second access network device sends the measurement result to the location management function network element.

It should be noted that, in this embodiment of this application, that a network element (for example, a network element A) receives information from another network element (for example, a network element B) may mean that the network element A directly receives information from the network element B, or may mean that the network element A receives information from the network element B through another network element (for example, a network element C). When the network element A receives the information from the network element B through the network element C, the network element C may transparently transmit the information, or may process the information, for example, include the information in different messages for transmission, or screen the information, and send only information obtained through screening to the network element A. Similarly, in various embodiments of this application, that the network element A sends information to the network element B may mean that the network element A directly sends the information to the network element B, or may mean that the network element A sends the information to the network element B through another network element (for example, the network element C).

The terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of objects, and are not used to limit a sequence, a time sequence, priorities, or importance of the plurality of objects.

It should be noted that, names of the foregoing messages are merely examples. With evolution of communication technologies, the name of any one of the foregoing messages may change. However, regardless of how the names of the messages change, the messages fall within the protection scope of this application provided that meanings of the messages are the same as those of the foregoing messages in this application.

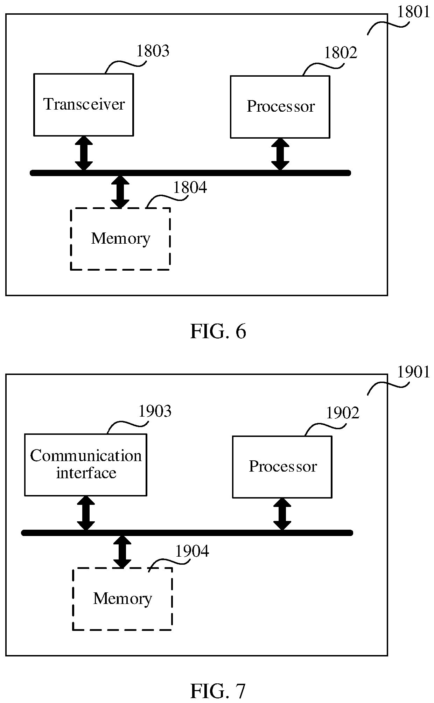

According to the foregoing method, FIG. 6 is a diagram of a structure of a communication apparatus according to an embodiment of this application. As shown in FIG. 6, the communication apparatus may be a first access network device, a second access network device, or a location management function network element, or may be a chip or a circuit, for example, a chip or a circuit that may be disposed in the first access network device, for another example, a chip or a circuit that may be disposed in the second access network device, or for another example, a chip or a circuit that may be disposed in the location management function network element.

The communication apparatus 1801 includes a processor 1802 and a transceiver 1803.

Further, the communication apparatus 1801 may include a memory 1804. In the figure, the memory 1804 is shown by dashed lines. This further indicates that the memory is optional.

Further, the communication apparatus 1801 may further include a bus system. The processor 1802, the memory 1804, and the transceiver 1803 may be connected through the bus system.

It should be understood that the processor 1802 may be a chip. For example, the processor 1802 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing methods may be implemented through a hardware integrated logic circuit in the processor 1802, or by using instructions in a form of software. The steps in the method disclosed with reference to embodiments of this application may be directly performed by a hardware processor, or may be performed by using a combination of hardware and a software module in the processor 1802. The software module may be located in a mature storage medium in the art, for example, a random access memory, a flash memory, a read-only memory, a programmable read-only memory, an electrically erasable programmable memory, or a register. The storage medium is located in the memory 1804. The processor 1802 reads information in the memory 1804 and completes the steps in the foregoing methods in combination with hardware in the processor 1802.

It should be noted that, the processor 1802 in this embodiment of this application may be an integrated circuit chip, and has a signal processing capability. In an implementation process, the steps in the foregoing method embodiments can be implemented through a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic component, a discrete gate or a transistor logic component, or a discrete hardware component. The processor may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by using a combination of hardware and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware in the processor.

It may be understood that the memory 1804 in this embodiment of this application may be a volatile memory or a nonvolatile memory, or may include a volatile memory and a nonvolatile memory. For related descriptions of the memory in this embodiment of this application, refer to the foregoing content. Details are not described herein again.

When the communication apparatus 1801 is the first access network device, the processor 1802 is configured to perform the following through the transceiver 1803: receiving first information from a location management function network element, and sending second information to a second access network device. The first information is used to request to determine a reference signal resource for a terminal device. The second information indicates to determine the reference signal resource for the terminal device, the reference signal resource is used by the terminal device to send a reference signal, and the reference signal is used to determine a location of the terminal device.

When the communication apparatus 1801 is the first access network device, the processor 1802 is further configured to perform the following through the transceiver 1803: receiving a message that is from the second access network device and that is used to request context information of the terminal device, and sending the context information to the second access network device.

When the communication apparatus 1801 is the first access network device, the processor 1802 is further configured to perform the following through the transceiver 1803: sending a first paging message to an access network device in a radio access network notification area of the terminal device. The first paging message is used to request the access network device that receives the first paging message to page the terminal device, and the access network device in the radio access network notification area of the terminal device includes the second access network device.

When the communication apparatus 1801 is the first access network device, the processor 1802 is further configured to perform the following through the transceiver 1803: sending a third paging message used to page the terminal device, and when the terminal device is not paged, sending the first paging message to the access network device in the radio access network notification area of the terminal device.

When the communication apparatus 1801 is the first access network device, the processor 1802 is further configured to perform the following through the transceiver 1803: sending, to the location management function network element, a message that indicates to release the reference signal resource determined by the first access network device for the terminal device.

When the communication apparatus 1801 is the first access network device, the processor 1802 is further configured to perform the following through the transceiver 1803: receiving a message that is from the location management function network element and that indicates to stop measuring the reference signal from the terminal device.

When the communication apparatus 1801 is the second access network device, the processor 1802 is configured to perform the following through the transceiver 1803: receiving second information from a first access network device, and sending reference signal resource information to a terminal device. The second information is used to request to determine a reference signal resource for the terminal device, the reference signal resource is used by the terminal device to send a reference signal, and the reference signal is used to determine a location of the terminal device.

When the communication apparatus 1801 is the second access network device, the processor 1802 is further configured to perform the following through the transceiver 1803: receiving a message that is from the terminal device and that is used to request to resume a radio resource control RRC connection, sending, to the first access network device, a message that is used to request context information of the terminal device, and receiving the context information from the first access network device.

When the communication apparatus 1801 is the second access network device, the processor 1802 is further configured to perform the following through the transceiver 1803: receiving a first paging message from the first access network device, and sending a second paging message. The first paging message is used to request the access network device that receives the first paging message to page the terminal device, and the second paging message is used to page the terminal device.

When the communication apparatus 1801 is the second access network device, the processor 1802 is further configured to perform the following through the transceiver 1803: sending, to the terminal device, a message used to release the RRC connection. The message used to release the RRC connection includes the reference signal resource information.

When the communication apparatus 1801 is the second access network device, the processor 1802 is further configured to perform the following through the transceiver 1803: sending a first message to the location management function network element based on the received second information. The first message includes the reference signal resource information.

When the communication apparatus 1801 is the second access network device, the processor 1802 is further configured to perform the following through the transceiver 1803: sending, to a mobility management function network element, a message that indicates the terminal device to access the second access network device, and receiving, from the mobility management function network element, a response message of the message that indicates the terminal device to access the second access network device.

When the communication apparatus 1801 is the second access network device, the processor 1802 is further configured to perform the following through the transceiver 1803:
receiving a message that is from a location management function network element and that is used to request the second access network device to measure the reference signal from terminal device.

When the communication apparatus 1801 is the second access network device, the processor 1802 is further configured to perform the following through the transceiver 1803: receiving the reference signal from the terminal device; measuring the reference signal to obtain a measurement result; and sending the measurement result to the location management function network element. The measurement result is used to determine location information of the terminal device.

When the communication apparatus 1801 is the location management function network element, the processor 1802 is configured to perform the following through the transceiver 1803: sending first information to a first access network device, receive a first message from a second access network device, and sending, to at least one of the second access network device and a neighboring access network device of the second access network device, a message used to request to measure a reference signal from the terminal device. The first information is used to request to determine a reference signal resource for the terminal device. The first message includes reference signal resource information determined by the second access network device for the terminal device. A reference signal resource indicated by the reference signal resource information is used by the terminal device to send the reference signal. The reference signal is used to determine a location of the terminal device.

When the communication apparatus 1801 is the location management function network element, the processor 1802 is further configured to perform the following through the transceiver 1803: receiving, from the first access network device, a message that indicates to release the reference signal resource determined by the first access network device for the terminal device; and sending, to the first access network device, a message that indicates to stop measuring the reference signal from the terminal device.

When the communication apparatus 1801 is the location management function network element, the processor 1802 is further configured to perform the following through the transceiver 1803: receiving a measurement result that is from the second access network device and that is obtained by measuring the reference signal from the terminal device. The measurement result is used to determine location information of the terminal device.

For a concept, an explanation, a detailed description, and other steps with respect to the communication apparatus that are related to the technical solutions provided in embodiments of this application, refer to descriptions of the content in the foregoing methods or another embodiment. Details are not described herein.

According to the foregoing method, FIG. 7 is a diagram of a structure of a communication apparatus according to an embodiment of this application. As shown in FIG. 7, the communication apparatus 1901 may include a communication interface 1903 and a processor 1902. Further, the communication apparatus 1901 may include a memory 1904. In the figure, the memory 1904 is shown by dashed lines. This further indicates that the memory is optional. The communication interface 1903 is configured to input and/or output information. The processor 1902 is configured to execute a computer program or instructions, to enable the communication apparatus 1901 to implement the method on the first access network device side in any one of the related solutions in FIG. 3 or FIG. 5, enable the communication apparatus 1901 to implement the method on the second access network device side in any one of the related solutions in FIG. 3 or FIG. 5, or enable the communication apparatus 1901 to implement the method on the location management function network element side in any one of the related solutions in FIG. 3 or FIG. 5. In this embodiment of this application, the communication interface 1903 may implement the solution implemented by the transceiver 1803 in FIG. 6, the processor 1902 may implement the solution implemented by the processor 1802 in FIG. 6, and the memory 1904 may implement the solution implemented by the memory 1804 in FIG. 6. Details are not described herein again.

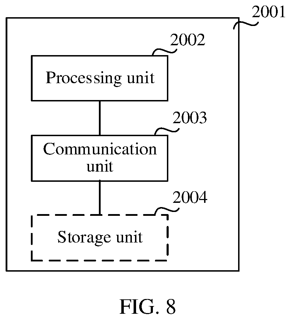

Based on the foregoing embodiments and a same concept, FIG. 8 is a diagram of a communication apparatus according to an embodiment of this application. As shown in FIG. 8, the communication apparatus 2001 may be a first access network device, a second access network device, or a location management function network element, or may be a chip or a circuit, for example, a chip or a circuit that may be disposed in the first access network device, the second access network device, or the location management function network element.

The communication apparatus 2001 includes a processing unit 2002 and a communication unit 2003. Further, the communication apparatus 2001 may include a storage unit 2004, or may not include a storage unit 2004. In the figure, the storage unit 2004 is shown by dashed lines. This further indicates that the memory is optional.

The communication unit 2003 is configured to input and/or output information. The processing unit 2002 is configured to execute a computer program or instructions, to enable the communication apparatus 2001 to implement the method on the first access network device side in any one of the related solutions in FIG. 3 or FIG. 5, enable the communication apparatus 2001 to implement the method on the second access network device side in any one of the related solutions in FIG. 3 or FIG. 5, or enable the communication apparatus 2001 to implement the method on the location management function network element side in any one of the related solutions in FIG. 3 or FIG. 5. In this embodiment of this application, the communication unit 2003 may implement the solution implemented by the transceiver 1803 in FIG. 6, the processing unit 2002 may implement the solution implemented by the processor 1802 in FIG. 6, and the storage unit 2004 may implement the solution implemented by the memory 1804 in FIG. 6. Details are not described herein again.

According to the method provided in embodiments of this application, this application further provides a computer program product. The computer program product includes computer program code or instructions. When the computer program code or the instructions are run on a computer, the computer is enabled to perform the method in any one of the embodiments shown in FIG. 3 or FIG. 5.

According to the method provided in embodiments of this application, this application further provides a computer-readable storage medium. The computer-readable medium stores program code. When the program code is run on a computer, the computer is enabled to perform the method in any one of the embodiments shown in FIG. 3 or FIG. 5.

According to the method provided in embodiments of this application, this application further provides a chip system. The chip system may include a processor. The processor is coupled to the memory, and may be configured to perform the method in any one of the embodiments shown in FIG. 3 or FIG. 5. Optionally, the chip system further includes the memory. The memory is configured to store a computer program (which may also be referred to as code or instructions). The processor is configured to invoke a computer program from the memory and run the computer program, to enable a device in which a chip system is installed to perform the method in any one of the embodiments shown in FIG. 3 or FIG. 5.

According to the method provided in embodiments of this application, this application further provides a system, including the first access network device, the second access network device, and the location management function network element.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid-state drive, SSD)), or the like.

It should be noted that a part of this patent application document includes content protected by copyright. Except for making copies of patent documents or recorded content of patent documents in the China National Intellectual Property Administration, the copyright owner reserves the copyright.

The second access network device or the first access network device in the foregoing apparatus embodiments corresponds to the second access network device or the first access network device in the method embodiments, and a corresponding module or unit performs a corresponding step. For example, a communication unit (a transceiver) performs a receiving or sending step in the method embodiments, and a processing unit (a processor) may perform a step other than the sending and receiving step. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both a computing device and an application that is run on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, with reference to various illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of embodiments.

In addition, functional units in embodiments of this application may be integrated into one processing unit, each unit may exist independently physically, or two or more units may be integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:
receiving, by a first access network device, first information from a location management function network element, wherein the first information is used to request to determine a reference signal resource for a terminal device; and
sending, by the first access network device, second information to a second access network device, wherein the second information indicates to determine the reference signal resource for the terminal device, the reference signal resource is used by the terminal device to send a reference signal, and the reference signal is used to determine a location of the terminal device.

2. The method according to claim 1, wherein the second information comprises the first information.

3. The method according to claim 1 or 2, wherein after the receiving, by a first access network device, first information from a location management function network element, and before the sending, by the first access network device, second information to a second access network device, the method further comprises:
receiving, by the first access network device from the second access network device, a message that is used to request context information of the terminal device; and
sending, by the first access network device, the context information to the second access network device, wherein the context information and the second information are carried in a context response message.

4. The method according to any one of claims 1 to 3, wherein after the sending, by the first access network device, second information to a second access network device, the method further comprises:
sending, by the first access network device to the location management function network element, a message that indicates to release the reference signal resource determined by the first access network device for the terminal device.

5. The method according to claim 4, wherein after the sending, by the first access network device to the location management function network element, a message that indicates to release the reference signal resource determined by the first access network device for the terminal device, the method further comprises:
receiving, by the first access network device, a message that is from the location management function network element and that indicates to stop measuring the reference signal from the terminal device.

6. A positioning method, comprising:
receiving, by a second access network device, second information from a first access network device, wherein the second information is used to request to determine a reference signal resource for a terminal device, the reference signal resource is used by the terminal device to send a reference signal, and the reference signal is used to determine a location of the terminal device; and
sending, by the second access network device, reference signal resource information to the terminal device.

7. The method according to claim 6, wherein before the receiving, by a second access network device, second information from a first access network device, the method further comprises:
receiving, by the second access network device, a message that is from the terminal device and that is used to request to resume a radio resource control RRC connection;
sending, by the second access network device to the first access network device, a message used to request context information of the terminal device; and
receiving, by the second access network device, the context information from the first access network device, wherein the context information and the second information are carried in a context response message.

8. The method according to claim 6 or 7, wherein the sending, by the second access network device, reference signal resource information to the terminal device comprises:
sending, by the second access network device to the terminal device, a message used to release an RRC connection, wherein the message used to release the RRC connection comprises the reference signal resource information.

9. The method according to any one of claims 6 to 8, wherein after the receiving, by a second access network device, second information from a first access network device, the method further comprises:
sending, by the second access network device, a first message to the location management function network element based on the received second information, wherein the first message comprises the reference signal resource information.

10. The method according to claim 8 or 9, wherein before the sending, by the second access network device, a first message to the location management function network element based on the received second information, the method further comprises:
sending, by the second access network device to a mobility management function network element, a message that indicates the terminal device to access the second access network device; and
receiving, by the second access network device from the mobility management function network element, a response message of the message that indicates the terminal device to access the second access network device.

11. The method according to any one of claims 8 to 10, wherein after the sending, by the second access network device, a first message to the location management function network element based on the received second information, the method further comprises:
receiving, by the second access network device, a message that is from the location management function network element and that is used to request the second access network device to measure the reference signal from the terminal device.

12. A positioning method, comprising:
sending, by a location management function network element, first information to a first access network device, wherein the first information is used to request to determine a reference signal resource for a terminal device;
receiving, by the location management function network element, a first message from a second access network device, wherein the first message comprises reference signal resource information determined by the second access network device for the terminal device, a reference signal resource indicated by the reference signal resource information is used by the terminal device to send a reference signal, and the reference signal is used to determine a location of the terminal device; and
sending, by the location management function network element to at least one of the second access network device and a neighboring access network device of the second access network device, a message used to request to measure the reference signal from the terminal device.

13. The method according to claim 12, wherein after sending, by the location management function network element, a positioning information request message to the first access network device, the method further comprises:
receiving, by the location management function network element from the first access network device, a message that indicates to release the reference signal resource determined by the first access network device for the terminal device; and
sending, by the location management function network element to the first access network device, a message that indicates to stop measuring the reference signal from the terminal device.

14. An access network device, comprising a processor and a communication interface, wherein the processor is configured to perform, through the communication interface, the following content:
receiving first information from a location management function network element, wherein the first information is used to request to determine a reference signal resource for a terminal device; and
sending second information to a second access network device, wherein the second information indicates to determine the reference signal resource for the terminal device, the reference signal resource is used by the terminal device to send a reference signal, and the reference signal is used to determine a location of the terminal device.

15. The access network device according to claim 14, wherein the second information comprises the first information.

16. The access network device according to claim 14 or 15, wherein the processor is further configured to perform, through the communication interface, the following content:
receiving, from the second access network device, a message that is used to request context information of the terminal device; and
sending the context information to the second access network device, wherein the context information and the second information are carried in a context response message.

17. The access network device according to any one of claims 14 to 16, wherein the processor is further configured to perform, through the communication interface, the following content:
sending, to the location management function network element, a message that indicates to release the reference signal resource determined by a first access network device for the terminal device.

18. The access network device according to claim 17, wherein the processor is further configured to perform, through the communication interface, the following content:
receiving a message that is from the location management function network element and that indicates to stop measuring the reference signal from the terminal device.

19. A positioning access network device, comprising a processor and a communication interface, wherein the processor is configured to perform, through the communication interface, the following content:
receiving second information from a first access network device, wherein the second information is used to request to determine a reference signal resource for a terminal device, the reference signal resource is used by the terminal device to send a reference signal, and the reference signal is used to determine a location of the terminal device; and
sending reference signal resource information to the terminal device.

20. The access network device according to claim 19, wherein the processor is further configured to perform, through the communication interface, the following content:
receiving a message that is from the terminal device and that is used to request to resume a radio resource control RRC connection;
sending, to the first access network device, a message used to request context information of the terminal device; and
receiving the context information from the first access network device, wherein the context information and the second information are carried in a context response message.

21. The access network device according to claim 19 or 20, wherein the processor is further configured to perform, through the communication interface, the following content:
sending, to the terminal device, a message used to release an RRC connection, wherein the message used to release the RRC connection comprises the reference signal resource information.

22. The access network device according to any one of claims 19 to 21, wherein the processor is further configured to perform, through the communication interface, the following content:
sending a first message to the location management function network element based on the received second information, wherein the first message comprises the reference signal resource information.

23. The access network device according to claim 21 or 22, wherein the processor is further configured to perform, through the communication interface, the following content:
sending, to a mobility management function network element, a message that indicates the terminal device to access a second access network device; and
receiving, from the mobility management function network element, a response message of the message that indicates the terminal device to access the second access network device.

24. The access network device according to any one of claims 21 to 23, wherein the processor is further configured to perform, through the communication interface, the following content:
receiving a message that is from the location management function network element and that is used to request the second access network device to measure the reference signal from the terminal device.

25. A location management function network element, comprising a processor and a communication interface, wherein the processor is configured to perform, through the communication interface, the following content:
sending first information to a first access network device, wherein the first information is used to request to determine a reference signal resource for a terminal device;
receiving a first message from a second access network device, wherein the first message comprises reference signal resource information determined by the second access network device for the terminal device, a reference signal resource indicated by the reference signal resource information is used by the terminal device to send a reference signal, and the reference signal is used to determine a location of the terminal device; and
sending, to at least one of the second access network device and a neighboring access network device of the second access network device, a message used to request to measure the reference signal from the terminal device.

26. The location management function network element according to claim 25, wherein the processor is further configured to perform, through the communication interface, the following content:
receiving, from the first access network device, a message that indicates to release the reference signal resource determined by the first access network device for the terminal device; and
sending, to the first access network device, a message that indicates to stop measuring the reference signal from the terminal device.

27. A communication apparatus, comprising a processor and a memory, wherein
the memory is configured to store a computer program or instructions; and
the processor is configured to execute the computer program or the instructions in the memory, to perform the method according to any one of claims 1 to 5, the method according to any one of claims 6 to 11, or the method according to claim 12 or 13.

28. A communication apparatus, comprising a processing module and a communication module, wherein the processing module is configured to perform the method according to any one of claims 1 to 5, the method according to any one of claims 6 to 11, or the method according to claim 12 or 13 through the communication module.

29. A computer-readable storage medium, wherein the computer-readable storage medium stores computer-executable instructions, and when the computer-executable instructions are invoked by a computer, the method according to any one of claims 1 to 5 is performed, the method according to any one of claims 6 to 11 is performed, or the method according to claim 12 or 13 is performed.

30. A chip system, comprising a communication interface and a processor, wherein
the communication interface is configured to input and/or output signaling or data; and
the processor is configured to execute a computer-executable program, to perform the method according to any one of claims 1 to 5, the method according to any one of claims 6 to 11, or the method according to claim 12 or 13.
